# EUROPEAN PATENT APPLICATION

(11) **EP 4 734 104 A1**
(43) Date of publication of application: **29.04.2026**
(21) Application number: 24855253.1
(22) Date of filing: 12.03.2024
(51) Int. Cl.: G10L 15/22

(54) **SPEECH CONTROL METHOD, DEVICE SELECTION METHOD, AND ELECTRONIC DEVICE**

(30) Priority: 24.08.2023 CN 202311076247
(71) Applicant: Honor Device Co., Ltd., Shenzhen, Guangdong 518040 (CN)
(72) Inventor: CAI, Zhiheng, Shenzhen, Guangdong 518040 (CN)
(74) Representative: Isarpatent
(86) International application number: PCT/CN2024/081270
(87) International publication number: WO 2025/039522

(57) **Abstract**

Embodiments of this application are applied to the field of voice control technologies, and provide a voice control method, a device selection method, and an electronic device. When a first electronic device receives a voice instruction sent by a user, the first electronic device sends an action instruction to a target device according to the voice instruction when the voice instruction includes a wakeup keyword corresponding to the target device, where the action instruction is used for representing an action that the user wants the target device to execute in the voice instruction. In this application, remote interaction between electronic devices can be implemented, accuracy of action execution of a target device is improved, and interaction experience of the user is further improved.

## Description

This application claims priority to Chinese Patent Application No. 202311076247.7, filed with the China National Intellectual Property Administration on August 24, 2023 and entitled "VOICE CONTROL METHOD, DEVICE SELECTION METHOD, AND ELECTRONIC DEVICE", which is incorporated herein by reference in its entirety.

### TECHNICAL FIELD

This application relates to the field of voice control technologies, and in particular, to a voice control method, a device selection method, and an electronic device.

### BACKGROUND

With continuous development of voice recognition technologies, an electronic device (such as a mobile phone) may execute a corresponding action according to a voice instruction sent by a user. For example, the user sends a voice instruction "YOYO, call mom", and the mobile phone may dial mom's mobile number according to the voice instruction, to implement interaction between the user and the electronic device.

However, because of some reasons (for example, the electronic device is far away from the user), the electronic device cannot accurately recognize the voice instruction, and consequently, the electronic device does not respond or responds incorrectly, affecting use experience of the user.

### SUMMARY

Embodiments of this application provide a voice control method, a device selection method, and an electronic device, to recognize a voice instruction in time and accurately, so that the electronic device can respond in time and accurately.

To achieve the foregoing objective, the following technical solutions are used in embodiments of this application.

According to a first aspect, a voice control method is provided. The voice control method is applied to a first electronic device in a voice sharing system. The voice sharing system includes a plurality of electronic devices, the plurality of electronic devices correspond to different wakeup keywords, and the plurality of electronic devices establish a communication connection. In the method, first, the first electronic device receives a voice instruction sent by a user. Then, if the voice instruction includes a wakeup keyword corresponding to a target device and action information, the first electronic device sends an action instruction to the target device corresponding to the identifier of the target device. Then, the target device executes the action instruction.

In this application, the first electronic device is an electronic device in the voice sharing system, and the first electronic device is configured to send an action instruction to the target device, so that the target device executes the action instruction. That is, as long as any electronic device in the voice sharing system receives the voice instruction, the target device can be controlled to execute a corresponding action, and the target device can execute the corresponding action without needing to receive the voice instruction. In this way, remote interaction between electronic devices can be implemented, which not only can reduce occurrence of incorrect execution of an action by the target device or incapability of executing an action due to a relatively long distance between the user and the target device and improve accuracy of action execution of the target device, but also can reduce occurrence of a case in which the target device cannot receive a voice instruction due to damage of a microphone of the target device, thereby improving reliability of the voice sharing system, and further improving interaction experience of the user.

In a possible implementation of the first aspect, the first electronic device is determined based on electronic device information selected by the user on a first interface displayed by a second electronic device, or the first electronic device is determined based on electronic device information corresponding to a control control selected by the user on a second interface displayed by the second electronic device; and the second electronic device is one of the plurality of electronic devices, and the second electronic device may be the same as or different from the first electronic device.

In this application, because the first electronic device is determined according to a selection operation of the user on any electronic device information on the first interface, or the first electronic device is determined according to a control operation of the user on any control control on the second interface, that is, the first electronic device is a device specified by the user, the first electronic device may directly perform analysis according to a received voice instruction, to obtain the identifier of the target device and the action instruction. The voice sharing system does not need to first determine the first electronic device to perform voice instruction analysis. In this way, a calculation process of determining the first electronic device can be reduced, thereby improving efficiency of executing an action by the target device.

In a possible implementation of the first aspect, the first electronic device is an electronic device in the plurality of electronic devices that corresponds to a received voice instruction whose signal strength value meets a preset signal condition.

In this application, the first electronic device is determined according to a signal strength value, and the signal strength value is a signal strength value meeting the preset signal condition. Therefore, after the user sends the voice instruction, the target device and the action instruction that are obtained by parsing by the first electronic device are accurate. That is, the first electronic device can accurately identify the voice instruction sent by the user, thereby ensuring that the target device can accurately execute the action instruction sent by the user, reducing occurrence of mistaken action execution caused by unclear voice instruction received by the target device, and improving user interaction experience.

In a possible implementation of the first aspect, when the action instruction includes a call initiation instruction, a process of sending, by the first electronic device, the action instruction may specifically include: The first electronic device sends the call initiation instruction to the target device corresponding to the identifier of the target device. Then, the target device may perform call initiation according to a called number or contact information in the call initiation instruction, and display a call initiation interface. The contact information may include a name of a contact or a phone number of the contact.

In this application, if the action instruction includes a call initiation instruction, the target device may execute the call initiation instruction, and display a call initiation interface on the target device. In this way, as long as the first electronic device can determine the target device and the action instruction, the target device can execute a corresponding action. That is, regardless of whether the target device can accurately receive the voice instruction sent by the user, the target device can accurately execute the corresponding action, thereby improving use experience of the user.

In a possible implementation of the first aspect, the method further includes: The first electronic device receives called number information sent by the target device. Then, the first electronic device displays the call initiation interface, where the call initiation interface includes the called number information.

In this application, after the target device executes the action of call initiation, the first electronic device may receive the called number information sent by the target device, so as to display the call initiation interface according to the called number information. That is, the first electronic device also synchronously displays the corresponding call initiation interface. In this way, even if the user is far away from the target device, the user may also make a call with a contact by using the interface displayed on the first electronic device, so that the user can clearly learn of a call status, and can communicate with the contact in time when the call is connected, thereby improving use experience of the user.

In a possible implementation of the first aspect, when the action instruction includes a vehicle control instruction, the process of sending, by the first electronic device, the action instruction may specifically include: The first electronic device sends the vehicle control instruction to a target vehicle. Then, in response to the vehicle control instruction, an in-vehicle system in the target vehicle controls a target component in the vehicle to execute a corresponding action.

In this application, if the action instruction includes the vehicle control instruction, the target device may control the target component to execute a corresponding action. In this way, as long as the first electronic device can determine the target device and the action instruction, the target device can execute a corresponding action. That is, regardless of whether the target device can accurately receive the voice instruction sent by the user, the target device can accurately execute the corresponding action, thereby improving use experience of the user. In addition, by using the manner of determining the target device and the action instruction by the first electronic device, not only remote control of the vehicle can be implemented, but also cases in which the vehicle cannot receive the voice instruction sent by the user due to a fault of hardware (such as a microphone) in the vehicle can be reduced, thereby improving reliability of the intelligent voice sharing system.

In a possible implementation of the first aspect, the method further includes: The first electronic device receives an execution result of the action instruction sent by the target device. The execution result of the action instruction includes completed state information or failed state information, the completed state information is used for indicating that the target device has completed the action corresponding to the action instruction, and the failed state information is used for indicating that the target device fails to respond to the action instruction. Then, the first electronic device outputs the execution result of the action instruction.

The first electronic device may output the execution result of the action instruction in a voice or text manner.

In this application, when the first electronic device receives the execution result of the action instruction sent by the target device, the first electronic device may output the execution result of the action instruction in a voice or text manner. In this way, the user can learn of the execution result of the action instruction in time, thereby avoiding the user from making a doubt about whether the voice instruction is executed, and further improving use experience of the user. In addition, if the execution result of the action instruction is the failed state information, the user may manually control the target device to execute the action instruction or send a voice instruction again, reducing waiting time of the user.

According to a second aspect, a device selection method is provided, and is applied to a first device in a plurality of electronic devices of a voice sharing system, wakeup keywords corresponding to the plurality of electronic devices are different, and a communication connection is established between the plurality of electronic devices. In the method, the first device receives a voice instruction received by another electronic device in the voice sharing system other than the first device. Then, the first device recognizes, for a voice instruction received by each of the plurality of electronic devices, the voice instruction according to a voice recognition algorithm, to obtain a signal strength value corresponding to the voice instruction, where the voice recognition algorithm is an algorithm for calculating signal strength of the voice instruction according to voice loudness and/or voice quality. Then, the first device uses an electronic device corresponding to a received voice instruction whose signal strength value meets a preset signal condition as a first electronic device, where the first device is the same as or different from the first electronic device.

In this application, the first device may recognize the voice instruction by using a voice recognition algorithm, to obtain the signal strength value corresponding to the voice instruction. The voice recognition algorithm is an algorithm that calculates signal strength of the voice instruction according to voice loudness and/or voice quality. Therefore, a voice instruction whose signal strength value meets a preset signal condition is a voice instruction that is relatively less affected by noise and that is relatively clear. That is, an electronic device corresponding to the voice instruction is an electronic device that receives the voice instruction most clearly, which provides a basis for subsequent accurate recognition of the voice instruction by the first electronic device. In addition, this can improve an intelligent cooperative capability of all electronic devices in the intelligent voice sharing system. That is, as long as one electronic device in the intelligent voice sharing system can receive a voice instruction with strongest signal strength, the target device can complete a corresponding action, without needing the target device to receive a voice instruction sent by the user, thereby increasing use scenarios of the intelligent voice sharing system, and improving user experience.

In addition, because the voice instruction includes only a wakeup keyword corresponding to any one of the plurality of electronic devices, the first device can determine a corresponding signal strength value when the user sends action information, and the first device does not need to calculate the signal strength until the user outputs the action information, thereby providing a basis for subsequently determining the first electronic device in time, and further improving determining efficiency of the first electronic device.

In a possible implementation of the second aspect, the method further includes: When the signal strength value is the highest or the signal strength value is greater than a preset strength value, the first device determines that the signal strength value meets the preset signal condition.

In a possible implementation of the second aspect, the foregoing process of determining the first electronic device may specifically include: The first device determines a quantity of received voice instructions whose signal strength values meet a preset signal condition, and when the quantity is 1, the first device may directly use an electronic device corresponding to the voice instruction whose signal strength value meets the preset signal condition as the first electronic device.

In this application, if the quantity of voice instructions whose signal strength values meet the preset signal condition is 1, the first device may directly use the electronic device corresponding to the voice instruction whose signal strength value meets the preset signal condition as the first electronic device. In this way, accuracy of determining the first electronic device can be improved, and a basis is provided for subsequently accurately recognizing the voice instruction.

In a possible implementation of the second aspect, the foregoing manner further includes: When there are a plurality of voice instructions whose signal strength values meet the preset signal condition, the first device may use electronic devices corresponding to the voice instructions whose signal strength values meet the preset signal condition as candidate first electronic devices. Then, the first device may obtain state information of each candidate first electronic device. The state information includes at least one of endurance state information, running state information, and a quantity of background running programs. Then, the first device uses an electronic device corresponding to a voice instruction meeting a preset condition corresponding to the state information as the first electronic device.

In this application, if there are a plurality of voice instructions whose signal strength values meet the preset signal condition, the first device may use, according to the state information of the candidate first electronic devices, an electronic device corresponding to a voice instruction that meets the preset condition corresponding to the state information as the first electronic device. In this way, the first electronic device may be a device having a best state in the candidate first electronic devices, thereby providing a basis for subsequently accurately recognizing the voice instruction.

In a possible implementation of the second aspect, when the state information includes the endurance state information, a preset condition corresponding to the endurance state information includes that the electronic device is in a charging mode or a remaining battery level of the electronic device is the highest.

In this application, the first electronic device is an electronic device that is in a charging mode or has a highest remaining battery level. In this way, it can be ensured that the first electronic device has a sufficient battery level, and a case in which an excessively low battery level affects subsequent use by the user due to recognition of the voice instruction by the device is avoided.

In a possible implementation of the second aspect, when the state information includes the running state information, a preset condition corresponding to the running state information includes that the electronic device is in an idle state, where the idle state refers to a state corresponding to an electronic device that is not used by the user.

In this application, the first electronic device is an electronic device in an idle state. In this way, a running speed of the first electronic device can be ensured, a case in which the running speed is relatively low due to many programs or algorithms running on the electronic device is reduced, and use experience of the user is improved.

In a possible implementation of the second aspect, when the state information includes the quantity of background running programs, a preset condition corresponding to the quantity of background running programs includes that the quantity of background running programs in the electronic device is minimum, or the quantity of background running programs in the electronic device is less than a preset quantity. The quantity of background running programs indicates a quantity of application programs running in the background in the electronic device.

In this application, the first electronic device is an electronic device whose quantity of background running programs is the minimum or whose quantity of background running programs is less than a preset quantity. In this way, a running speed of the first electronic device can be ensured, occurrence of a relatively low running speed caused by a relatively large quantity of background running programs in the electronic device is reduced, and use experience of the user is improved.

In a possible implementation of the second aspect, when the state information includes a plurality of types of information, the foregoing process of determining the first electronic device may specifically include: The first device screens, according to a descending sequence of priorities corresponding to the state information, a plurality of temporary first electronic devices sequentially according to state information corresponding to the priorities, to obtain candidate first electronic devices meeting a preset condition corresponding to the state information corresponding to the priorities. Then, when a candidate first electronic device meeting a preset condition corresponding to state information corresponding to a lowest priority is obtained, the first device uses the candidate first electronic device meeting the preset condition corresponding to the state information corresponding to the lowest priority as the first electronic device.

In this application, the first device sequentially compares the state information of the electronic devices according to the preset priorities, until the first electronic device is determined from the candidate first electronic devices. In this way, it can be ensured that the first electronic device is a device having a best comprehensive state in the candidate first electronic devices, thereby providing a basis for subsequently accurately recognizing the voice instruction.

In a possible implementation of the second aspect, after the first device determines the first electronic device, the method further includes: The first device may upload a determining result of the first electronic device to another device in the intelligent voice sharing system.

In this application, after determining the first electronic device, the first device uploads the determining result of the first electronic device. In this way, all the electronic devices in the voice sharing system can clearly know the determining result of the first electronic device. This not only can reduce occurrence of resource waste caused by instruction analysis performed by a device that is not the temporary hub, but also can reduce occurrence of a plurality of times of repeatedly executing an action instruction by the target device because the action instruction is sent to the target device for a plurality of times.

According to a third aspect, a voice control method is provided, and applied to a plurality of electronic devices in a voice sharing system, all the electronic devices in the voice sharing system correspond to different wakeup keywords, and a communication connection is established between the electronic devices in the plurality of electronic devices. In the method, at least one electronic device in the voice sharing system separately receives a voice instruction input by a user. Then, when the voice instruction includes a wakeup keyword corresponding to any one of the plurality of electronic devices and action information, a first electronic device in the at least one electronic device determines an identifier of a target device and an action instruction based on the voice instruction, where the target device refers to the electronic device corresponding to the wakeup keyword. Then, the first electronic device sends an action instruction to the target device corresponding to the identifier of the target device. Then, the target device executes a corresponding action in response to the action instruction.

In this application, as long as any electronic device in the voice sharing system receives a voice instruction, the target device can be controlled to execute a corresponding action. This does not require that the target device receives the voice instruction sent by the user to execute the corresponding action. In this way, a basis is provided for the target device to accurately respond to an action instruction of the user subsequently, and occurrence of incorrect action execution caused by an unclear voice instruction received by the target device is reduced. Accuracy of action execution by the target device is improved, thereby improving interaction experience of the user. In addition, it may also be avoided that the target device cannot successfully receive the voice instruction sent by the user.

In a possible implementation of the third aspect, when the electronic devices in the voice sharing system are electronic devices of a same manufacturer, a voice sharing APP may be installed on each electronic device in the voice sharing system. Then, each electronic device in the voice sharing system may log in to account information of a same user, to implement establishment of the intelligent voice sharing system.

In a possible implementation of the third aspect, when the electronic devices in the voice sharing system are electronic devices of different manufacturers, a particular APP may be installed on the electronic device in the voice sharing system. The particular APP is an intelligent voice sharing APP specified by the electronic device of each manufacturer. Then, the electronic device in the voice sharing system may log in to the particular APP according to an account and a password.

In this application, the electronic device may set up a voice sharing system for electronic devices of different manufacturers by installing and logging in to a particular APP, so as to integrate all resources of the electronic devices in the voice sharing system. That is, regardless of whether the intelligent voice sharing system includes electronic devices of a same manufacturer or electronic devices of different manufacturers, resources may be shared. In this way, not only interactivity between electronic devices of different manufacturers can be improved, but also an interconnection path between different electronic devices of a same manufacturer is added, thereby improving use experience of the user.

In a possible implementation of the third aspect, the first electronic device is determined based on a selection operation input by the user on electronic device information displayed on a first interface displayed on a second electronic device, or the first electronic device is determined based on a control operation input by the user on electronic device information displayed on a first interface displayed on the second electronic device. The second electronic device may be the same as or different from the first electronic device.

In a possible implementation of the third aspect, the first electronic device is an electronic device in the plurality of electronic devices that corresponds to a received voice instruction whose signal strength value meets a preset signal condition.

According to a fourth aspect, this application provides an electronic device, where the electronic device includes a microphone, a memory, and one or more processors. The microphone, the memory, and the processor are coupled to each other; and the microphone is configured to collect voice data, the memory is configured to store computer program code, and the computer program code includes computer instructions; and when the processor executes the computer instructions, the electronic device is enabled to perform the foregoing method.

According to a fifth aspect, this application provides a computer-readable storage medium, including computer instructions. When the computer instructions are run on an electronic device, the electronic device is enabled to perform the foregoing method.

According to a sixth aspect, this application provides a computer program product. When the computer program product runs on an electronic device, the electronic device is enabled to perform the foregoing method.

According to a seventh aspect, a chip is provided, including: an input interface, an output interface, a processor, and a memory. The input interface, the output interface, the processor, and the memory are connected through an internal connection path. The processor is configured to execute code in the memory. When the code is executed, the processor is configured to perform the foregoing method.

It may be understood that, for beneficial effects that can be achieved by the foregoing provided device selection method according to the second aspect, the voice control method according to the third aspect, the electronic device according to the fourth aspect, the computer-readable storage medium according to the fifth aspect, the computer program product according to the sixth aspect, and the chip according to the seventh aspect, references may be made to the beneficial effects in the first aspect and any possible design thereof, and details are not described herein again.

### BRIEF DESCRIPTION OF DRAWINGS

FIG. 1 is a schematic diagram of a scenario in which a distance between a user and a mobile phone is displayed according to an embodiment of this application;
FIG. 2 is a schematic diagram of a scenario in which a distance between a user and a vehicle is displayed according to an embodiment of this application;
FIG. 3 is a schematic diagram of a hardware structure of an electronic device according to an embodiment of this application;
FIG. 4 is a flowchart of a voice control method according to an embodiment of this application;
FIG. 5 is a schematic diagram of an interface for logging in to an intelligent voice sharing APP according to an embodiment of this application;
FIG. 6 is a schematic diagram of an interface for displaying authorization information according to an embodiment of this application;
FIG. 7 is a schematic diagram of an interface for selecting a temporary hub according to an embodiment of this application;
FIG. 8 is a schematic diagram of an interface for selecting a smart scenario according to an embodiment of this application;
FIG. 9 is a schematic diagram of a scenario for a smart home according to an embodiment of this application;
FIG. 10 is a flowchart of another voice control method according to an embodiment of this application;
FIG. 11 is a schematic diagram of an interface for making a call according to an embodiment of this application;
FIG. 12 is a schematic diagram of a scenario in which a user sends a voice instruction according to an embodiment of this application;
FIG. 13 is a schematic diagram of a voice control process according to an embodiment of this application; and
FIG. 14 is a schematic diagram of another voice control process according to an embodiment of this application.

### DESCRIPTION OF EMBODIMENTS

The following describes technical solutions in embodiments of this application with reference to accompanying drawings in embodiments of this application. In the descriptions of this application, unless otherwise specified, "and/or" this application is merely used to describe an association relationship between associated objects, and represents that three relationships may exist. For example, A and/or B may represent the following three cases: Only A exists, both A and B exist, and only B exists, where A and B each may be in a singular or plural form. In addition, in the descriptions of this application, unless otherwise specified, "a plurality of" means two or more. "at least one of the following" or a similar expression thereof indicates any combination of these items, including a single item or any combination of a plurality of items. For example, at least one of a, b, or c may represent "a", "b", "c"," "a and b", "a and c", "b and c", or "a, b, and c", where a, b, and c may be singular or plural. In addition, for ease of clearly describing the technical solutions in the embodiments of this application, in the embodiments of this application, words such as "first" and "second" are used to distinguish same items or similar items whose functions and roles are basically the same. A person skilled in the art may understand that the words such as "first" and "second" do not limit a quantity and an execution sequence, and the words such as "first" and "second" do not indicate a definite difference. In addition, in the embodiments of this application, the word such as "example" or "for example" is used to represent giving an example, an illustration, or a description. Any embodiment or design solution described as "an example" or "for example" in the embodiments of this application should not be construed as being more preferred or advantageous than other embodiments or design solutions. Exactly, use of the word such as "example" or "for example" is intended to present a related concept in a specific manner, to facilitate understanding.

With continuous development of electronic devices such as a mobile phone and a smart home, a voice recognition technology is widely applied to various use scenarios of the electronic devices. Specifically, the electronic device may execute a corresponding action by recognizing a voice instruction (or referred to as a voice signal) sent by a user. For example, using a call scenario as an example, if the user sends a voice instruction "YOYO, call mom", it indicates that the user wants to call mom. Therefore, the mobile phone may dial mom's mobile number according to the voice instruction, so as to implement a call between the user and mom, that is, implement interaction between the user and the electronic device.

In some embodiments, if a distance between the user and the electronic device is relatively long, or ambient noise of an environment in which the electronic device and the user are located is relatively loud, a voice signal received by the electronic device may be relatively weak. As a result, the electronic device may not be capable of accurately recognizing a voice instruction sent by the user. Consequently, an action execution error (that is, a response error) or no response may occur on the electronic device, affecting use experience of the user.

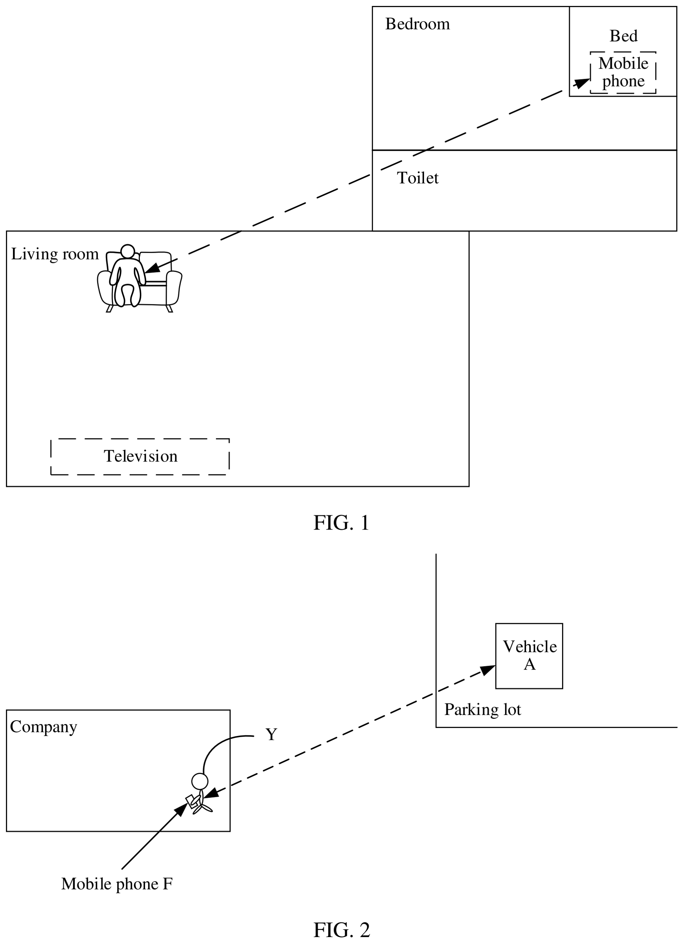

In an example, for the case in which the distance between the user and the electronic device is relatively long, referring to FIG. 1, an example in which a use scenario is a smart home scenario, and the electronic device is a mobile phone is used. Because the user is currently watching television in a living room, the mobile phone is located in a bedroom, and the mobile phone has a relatively long distance to the user, if the user needs to perform voice interaction with the mobile phone, the user needs to walk to the bedroom, or the user needs to turn up a volume to speak, so that the mobile phone can be controlled in a voice manner to execute a corresponding action. That is, the mobile phone can implement a corresponding interaction function only when the mobile phone accurately and clearly identifies a voice instruction sent by the user.

In another example, for the case in which the ambient noise of the environment in which the electronic device and the user are located is relatively loud, using the electronic device being a vehicle (for example, an in-vehicle terminal in the vehicle) as an example, in a traveling process of the vehicle, if the user sends a voice instruction (for example, close a vehicle window) when the vehicle is traveling on a construction road segment, that is, the ambient noise of the environment in which the electronic device and the user are located is relatively loud, the electronic device possibly cannot accurately recognize the voice instruction sent by the user. Therefore, the user needs to manually control the vehicle to execute a corresponding action (for example, the user operates a vehicle window closing component on the vehicle), or the user needs to send a corresponding voice instruction again after the vehicle passes through the construction road segment, so as to control the vehicle to execute a corresponding window closing action.

In some embodiments, if the distance between the user and the electronic device is relatively long, not only the case in which the voice signal received by the electronic device is relatively weak may occur, but also a case in which the electronic device cannot receive the voice signal output by the user. Consequently, the electronic device cannot execute a corresponding action in time. Alternatively, if a microphone of the electronic device is damaged, the electronic device may not receive the voice signal sent by the user. As a result, the electronic device may not recognize in time the voice instruction sent by the user, and therefore cannot execute a corresponding action in time. Consequently, user experience of the user is relatively low.

In an example, for the case in which the distance between the user and the electronic device is relatively long, and the electronic device cannot receive the voice signal output by the user, referring to FIG. 2, an example in which the use scenario is an intelligent vehicle scenario, and the electronic device is a vehicle A is used. When the user leaves the vehicle A (as shown in FIG. 2, the vehicle A is located in a parking lot near a company, and the user is on work at the company), that is, when the user has a relatively long distance to the vehicle A, the vehicle A cannot receive the voice instruction sent by the user. Therefore, if the user needs to perform voice interaction with the vehicle A, the distance between the user and the vehicle A needs to be shortened. For example, the user needs to return to the vehicle A to control the vehicle A in a voice manner to execute a corresponding action. That is, the vehicle A can implement a corresponding interaction function only after accurately and clearly recognizing the voice instruction sent by the user.

In another example, for the case in which the microphone of the electronic device is damaged, and the electronic device cannot receive the voice signal output by the user, using an example in which the electronic device is a vehicle, when the user sends a voice instruction, if a microphone of a vehicle A is damaged, the vehicle A may not receive the voice instruction sent by the user, and therefore, cannot execute a corresponding action according to the voice instruction. Therefore, to enable the vehicle A to execute the corresponding action, the user may need to manually control the vehicle A to execute the corresponding action, resulting in relatively low use experience of the user.

Therefore, for the foregoing problem, an embodiment of this application provides a voice control method. In the method, when at least one electronic device receives a voice instruction sent by a user, a temporary hub (or referred to as a first electronic device) may parse the received voice instruction, to obtain an identifier of a target device and an action instruction. The at least one electronic device is an electronic device that has an intelligent voice system and establishes a same intelligent voice sharing system, and the temporary hub is an electronic device that most clearly receives the voice instruction. Then, the temporary hub may send the action instruction to the target device. Then, the target device may execute the action instruction, and send an execution state of the action instruction to the temporary hub.

In this embodiment of this application, because the temporary hub is the electronic device that most clearly receives the voice instruction, after the user sends the voice instruction, the target device and the action instruction that are obtained by parsing by the temporary hub are accurate. That is, the temporary hub can accurately identify the voice instruction sent by the user, thereby ensuring that the target device can accurately execute the action instruction sent by the user, reducing occurrence of mistaken action execution caused by unclear voice instruction received by the target device, and improving user interaction experience.

For example, the electronic device may be any device that has an intelligent voice system, such as a mobile phone, a tablet computer, a notebook computer, a desktop computer, a television, a sound box, or a vehicle. A specific type of the electronic device is not limited in this embodiment of this application.

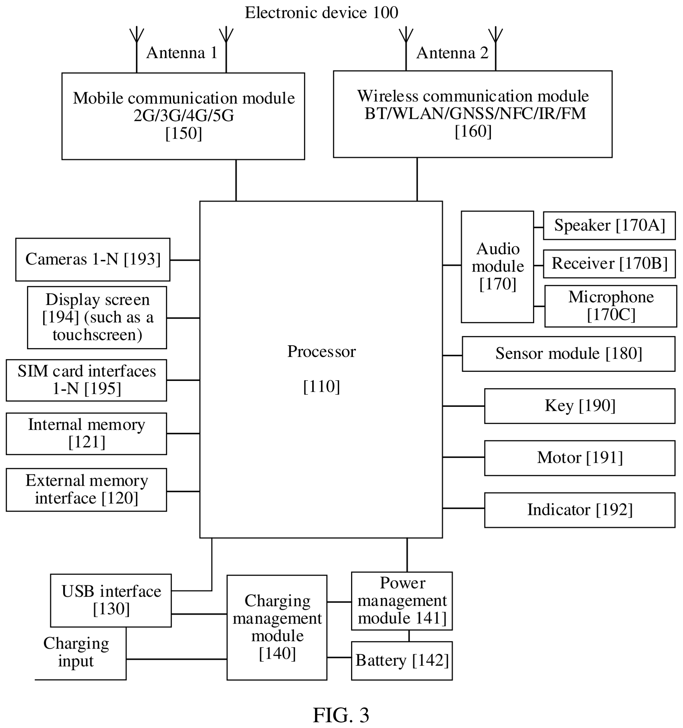

FIG. 3 is a schematic diagram of a hardware structure of an electronic device 100 according to an embodiment of this application. As shown in FIG. 3, the electronic device 100 may include a processor 110, an antenna 1, an antenna 2, a mobile communication module 150, a wireless communication module 160, an audio module 170, a speaker 170A, a receiver 170B, a microphone 170C, a sensor module 180, an external memory interface 120, an internal memory 121, a universal serial bus (universal serial bus, USB) interface 130, a charging management module 140, a power management module 141, a battery 142, a key 190, a motor 191, an indicator 192, cameras 1-N 193, a display screen 194, and subscriber identity module (subscriber identification module, SIM) interface cards 1-N 195. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of the present invention does not constitute a specific limitation on the electronic device 100. In some other embodiments of this application, the electronic device 100 may include more or fewer components than those shown in the figure, some components may be combined, some components may be split, or components may be arranged in different manners. Components shown in the figure may be implemented by using hardware, software, or a combination of software and hardware.

The processor 110 may include one or more processing units. For example, the processor 110 may include an application processor (AP), a modem processor, a graphics processing unit (GPU), an image signal processor (ISP), a controller, a memory, a video codec, a digital signal processor (DSP), a baseband processor, and/or a neural-network processing unit (NPU), etc. Different processing units may be independent components or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, and the like.

The I2S interface may be configured to perform audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may also be used for audio communication, to sample, quantize, and code an analog signal. In some embodiments, the audio module 170 may be coupled to the wireless communication module 160 by using the PCM bus interface. In some embodiments, the audio module 170 may also transfer an audio signal to the wireless communication module 160 by using the PCM interface, to implement a function of answering a call by using a Bluetooth headset. Both the I2S interface and the PCM interface may be used for audio communication.

A wireless communication function of the electronic device 100 may be implemented by using the antenna 1, the antenna 2, the mobile communication module 150, the wireless communication module 160, the modem processor, a baseband processor, and the like.

The antenna 1 and the antenna 2 are configured to transmit and receive electromagnetic wave signals. Each antenna in the electronic device 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 can provide a solution for wireless communication including 2G/3G/4G/5G and the like to be applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, by using the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium/highfrequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (not limited to the speaker 170A or the receiver 170B), or displays an image or a video by using the display screen 194. In some embodiments, the modem processor may be an independent component. In some other embodiments, the modem processor may be independent of the processor 110, and the modem processor and the mobile communication module 150 or another function module are disposed in a same component.

The wireless communication module 160 may provide a solution for wireless communication including a wireless local area network (wireless local area networks, WLAN) (such as a Wi-Fi (wireless fidelity) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert, by using the antenna 2, an amplified signal into an electromagnetic wave for radiation. In some embodiments, at least some functional modules of the wireless communication module 160 may be disposed in the processor 110.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communications technology may specifically include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation systems (satellite based augmentation systems, SBAS).

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. When charging the battery 142, the charging management module 140 may further supply power to the electronic device 100 by using the power management module 141.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs, and the GPU executes a program instruction to generate or change display information.

The display screen 194 is configured to display an image, a video, and the like. In some embodiments, the electronic device 100 may include 1 or N display screens 194, where N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. The camera 193 is configured to collect a still image or a video. In some embodiments, the electronic device 100 may include 1 or N cameras 193, where N is a positive integer greater than 1.

The digital signal processor is configured to process a digital signal. In addition to processing a digital image signal, the digital signal processor can further process another digital signal. For example, when the electronic device 100 performs frequency channel selection, the digital signal processor is configured to perform Fourier transformation and the like on frequency channel energy.

The electronic device 100 may implement an audio function such as music playing or recording by using the audio module 170, the speaker 170A, the telephone receiver 170B, the microphone 170C, the headset jack, and the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode by using the speaker.

The receiver 170B, also referred to as an "earpiece", is configured to convert an audio electrical signal into a sound signal. When a call is answered or audio information is listened to by using the electronic device 100, the receiver 170B may be put close to a human ear to listen to a voice.

The microphone 170C, also referred to as a "mic" or "mike", is configured to convert a sound signal into an electrical signal. When making a call or sending voice information, the user may make a sound by approaching the mouth to the microphone 170C, to input a sound signal to the microphone 170C. At least one microphone 170C may be disposed in the electronic device 100. In some other embodiments, the electronic device 100 may be provided with two microphones 170C, to implement a noise reduction function in addition to collecting a sound signal. In some other embodiments, three, four, or more microphones 170C may be disposed in the electronic device 100, to collect a sound signal, reduce noise, and identify a sound source, so as to implement a directional recording function and the like.

The headset jack is configured to be connected to a wired headset. The headset jack may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The external memory interface 120 may be configured to connect an external memory card, such as a Micro SD card, to expand a storage capacity of the electronic device 100.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playback function or an image playback function), and the like. The data storage area may store data (such as audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

The key 190 includes a power key, a volume key, and the like. The key 190 may be a mechanical key, or may be a touch key. The electronic device 100 may receive key input and generate a key signal input related to user settings and function control of the electronic device 100.

The motor 191 may generate a vibration alert. The motor 191 may be configured to provide a vibration prompt for an incoming call, and may also be configured to provide vibration feedback for touch. The indicator 192 may be an indicator light.

The SIM card interface 195 is configured to be connected to a SIM card. The SIM card may be inserted into the SIM card interface 195 or removed from the SIM card interface 195, to implement contact with or separation from the electronic device 100. The electronic device 100 may support 1 or N SIM card interfaces, N being a positive integer greater than 1. The SIM card interface 195 may support a Nano SIM card, a Micro SIM card, a SIM card, or the like. A plurality of cards may be simultaneously inserted into a same SIM card interface 195. The plurality of cards may be of a same type or different types. The SIM card interface 195 may also be compatible with SIM cards of different types. The SIM card interface 195 may be further compatible with the external memory card. The electronic device 100 interacts with a network by using the SIM card, to implement functions such as a call and data communication. In some embodiments, the electronic device 100 uses an eSIM, namely, an embedded SIM card. The eSIM card may be embedded in the electronic device 100 and cannot be separated from the electronic device 100.

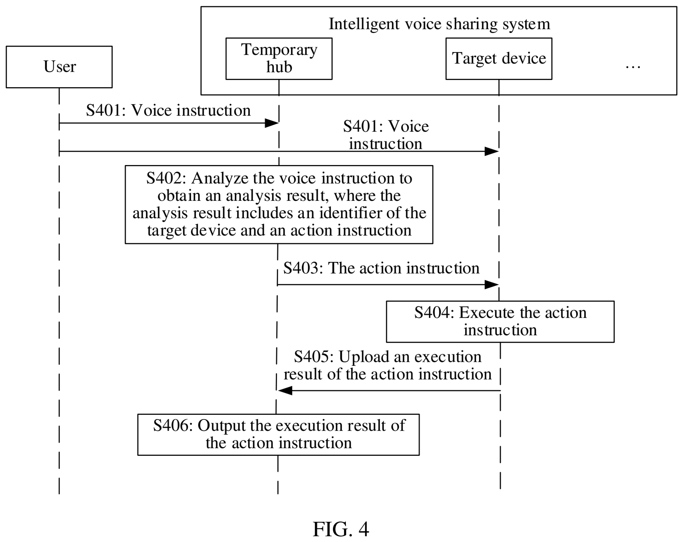

An embodiment of this application provides a voice control method. The method may be applied to any electronic device in an intelligent voice sharing system. Specifically, as shown in FIG. 4, the voice control method may include S401-S406.

S401: At least one electronic device in an intelligent voice sharing system receives a voice instruction sent by a user.

The voice instruction (or referred to as a voice signal) includes wakeup information (or referred to as a wakeup keyword) and/or action information (or referred to as an action instruction).

The wakeup information is used to indicate a target device that the user needs to control, that is, indicate a target device that is in the intelligent voice sharing system (or referred to as a voice sharing system) and that finally needs to respond to the voice instruction to execute a corresponding action. Corresponding wakeup keywords of electronic devices in the intelligent voice sharing system are different, so that the target device can be determined according to the wakeup keyword. The intelligent voice sharing system is a system for sharing voice instructions received by all electronic devices. That is, as long as one electronic device in the intelligent voice sharing system can receive a voice instruction sent by the user, the electronic device in the intelligent voice sharing system can control, according to the voice instruction, the target device to execute a corresponding action.

The action information is used to indicate an action that the target device needs to execute. For example, the action information may be a call initiation instruction. The call initiation instruction is used for triggering the target device to perform call initiation according to a called number or contact information in the call initiation instruction, and display a corresponding call initiation interface. The contact information may include a contact name (for example, mom) or a contact number. For example, the action information may alternatively be a vehicle control instruction. The vehicle control instruction is used to trigger the target device to perform control according to component information in the vehicle control instruction. The component information may include a component name (such as an air conditioner and a vehicle window).

In some embodiments, the intelligent voice sharing system may be established between electronic devices by using an APP. In an example, for an electronic device, if the electronic device is a device having a display screen (such as a mobile phone or a computer), the user may download an intelligent voice sharing application (APP) from the electronic device (such as an application market in the electronic device). Then, the user may log in to a same account in the intelligent voice sharing APP, to establish the intelligent voice sharing system.

In another example, if the electronic device is a device having no display screen (such as a sound box or a router), that is, an electronic device on which the intelligent voice sharing APP cannot be installed, the user may select an electronic device having the intelligent voice sharing APP from the intelligent voice sharing system. Later, the user may manually add the electronic device not having a display screen to the corresponding intelligent voice sharing APP in the electronic device having the intelligent voice sharing APP, to implement establishment of the intelligent voice sharing system.

In addition, it should be understood that the electronic devices in the intelligent voice sharing system may communicate with each other in a preset wireless communication manner. The preset wireless communication manner may include one or more of Bluetooth, WIFI, NFC, and a mobile network (such as 2G, 3G, 4G, or 5G).

In some embodiments, after the user outputs a voice instruction, each electronic device in the intelligent voice sharing system has a capability of receiving the voice instruction. For example, if the user wants to control a smart speaker in the intelligent voice sharing system to play music, the user may output a corresponding voice instruction. For example, the voice instruction may be "Speaker YOYO, play music". Then, an electronic device in the intelligent voice sharing system may receive the voice instruction. The electronic device is an electronic device in which a microphone is turned on and can answer a voice signal output by the user. The electronic device may not be limited to a smart speaker, but may include another electronic device (such as a mobile phone or a computer). That is, this does not require that the target device (such as the smart speaker) receives the voice instruction sent by the user to execute a corresponding action. In this way, a basis is provided for the target device to accurately respond to an action instruction of the user subsequently, and occurrence of incorrect action execution caused by an unclear voice instruction received by the target device is reduced. Accuracy of action execution by the target device is improved, thereby improving interaction experience of the user. In addition, it may also be avoided that the target device cannot successfully receive the voice instruction sent by the user.

For another example, if the user wants to remotely control a vehicle to turn on an air conditioner, the user may trigger a voice function of a nearest device. The nearest device refers to an electronic device nearest to the user, for example, a mobile phone carried by the user. For example, a manner of triggering the voice function of the nearest device may be enabling a corresponding voice function by manually tapping a target key (power key), or may be enabling a corresponding voice function through voice output (for example, the user outputs a wakeup keyword of the nearest device). Then, the user may directly output a corresponding voice instruction for the nearest device. For example, the voice instruction may be "Vehicle YOYO, turn on the air conditioner". Then, the nearest device may receive the voice instruction, to control the vehicle YOYO to execute an action of turning on the air conditioner. In this way, remote control of the electronic device can be implemented, which provides convenience for the user to remotely control the device.

For another example, the user wants to control a mobile phone to call contact mom, and the mobile phone is a device nearest to the user. That is, the user may only output a voice instruction to the mobile phone, then the user may directly tap a power key to enable a voice function of the mobile phone, and output a corresponding action instruction. For example, the action instruction may be "Call contact mom". Alternatively, the user may output a wakeup keyword of the mobile phone (for example, mobile phone YOYO), to enable the voice function of the mobile phone. Then, when the mobile phone receives the wakeup keyword output by the user, the mobile phone may output reply information (for example, I'm here) in a voice manner. Then, the user may output a corresponding action instruction (for example, call contact mother).

It may be understood that the wakeup keyword respectively corresponding to each electronic device in the intelligent voice sharing system may be preset by the user according to a habit of the user, or may be set by each electronic device by default, provided that each electronic device can be distinguished by using the wakeup keyword. This is not specifically limited. That is, corresponding wakeup keywords between electronic devices are different. For example, a wakeup keyword corresponding to a smart speaker may be speaker YOYO or Fangfang. For another example, a wakeup keyword corresponding to a tablet computer may be tablet computer YOYO or Miaomiao.

Specifically, for each electronic device in the intelligent voice sharing system, the electronic device (for example, a system manager in the electronic device) can obtain a wakeup keyword corresponding to another electronic device, so that the electronic device can learn of a wakeup keyword corresponding to any electronic device (including the electronic device itself) in the intelligent voice sharing system, so that the electronic device has a capability of determining the target device according to the wakeup keyword.

In some embodiments, to prevent the user from wrongly waking up the electronic device, in this application, a sound wave recognition technology in a voice recognition technology may be combined to determine that the electronic device executes a voice instruction sent by the user. In this way, a user identity can be determined, occurrence of wrongly waking up the electronic device by a non-device-owner is reduced, and use security of the electronic device is improved.

It should be noted that the electronic devices in the intelligent voice sharing system may be electronic devices of a same manufacturer, or may be electronic devices of different manufacturers. This is not specifically limited. The same manufacturer means that all the electronic devices in the intelligent voice sharing system correspond to the same manufacturer. The different manufacturers mean that at least two electronic devices in the intelligent voice sharing system correspond to different manufacturers. For example, the intelligent voice sharing system includes a device A, a device B, and a device C. The device A and the device B correspond to a same manufacturer, and the device B and the device C correspond to different manufacturers. In this case, it may be considered that the electronic devices in the intelligent voice sharing system correspond to different manufacturers.

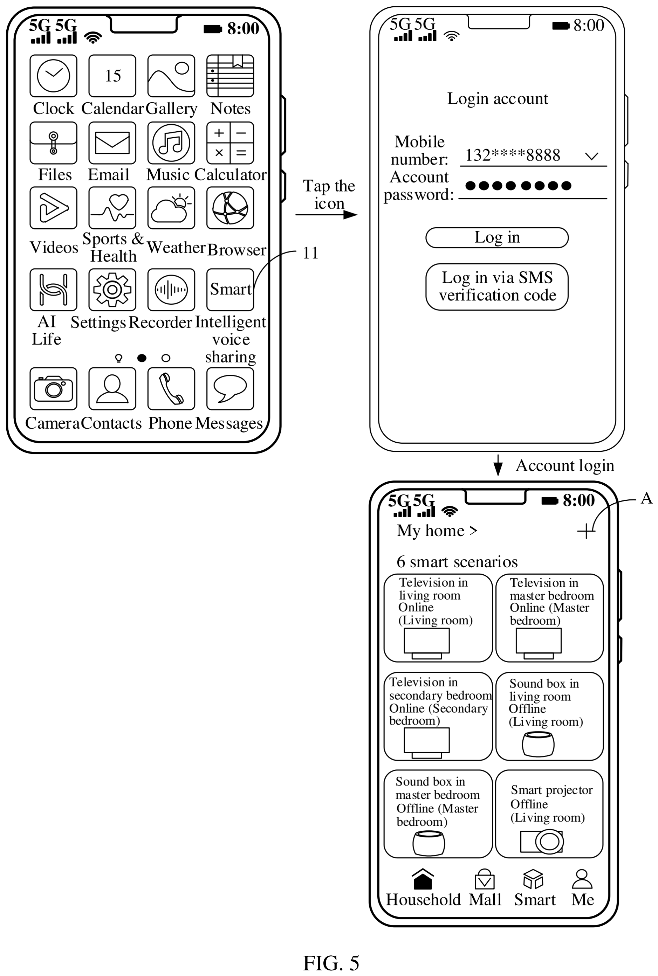

In an example, if the at least one electronic device is an electronic device of a same manufacturer, the intelligent voice sharing APP may be installed on each of the at least one electronic device. Later, each of the at least one electronic device may log in to account information of a same user, to implement establishment of the intelligent voice sharing system. For example, an electronic device in the intelligent voice sharing system is a mobile phone. After the mobile phone is installed with the intelligent voice sharing APP, if an application icon 11 corresponding to the intelligent voice sharing APP is tapped, the mobile phone may display an account login interface (as shown in FIG. 5). The user may input a corresponding mobile phone number and an account password on the account login interface. For example, the mobile phone number is 132****8888. Later, if a "log in" control is tapped, the mobile phone may present information (as shown in FIG. 5) about an electronic device that has agreed to perform intelligent voice sharing, such as information about a television or a sound box. The electronic device that has agreed to perform intelligent voice sharing represents an electronic device belonging to the intelligent voice sharing system. Later, if an "add" control A is tapped, an electronic device establishing a voice sharing function may be added by the mobile phone, that is, an electronic device in the intelligent voice system is added.

In another example, if the at least one electronic device is electronic devices of different manufacturers, the at least one electronic device may use a particular APP as connection software, that is, the at least one electronic device may install the particular APP. The particular APP is an intelligent voice sharing APP specified by electronic devices of manufacturers, that is, the particular APP is an APP that can be installed in electronic devices of manufacturers and that can run in the electronic devices. Then, the electronic device may perform login according to an account and a password. After login succeeds, the electronic device can obtain information about another electronic device used for logging in to the account, so as to establish the intelligent voice sharing system with the information about the another electronic device.

It may be understood that, in the intelligent voice sharing system in this implementation, all resources in the electronic devices may be integrated. That is, regardless of whether the intelligent voice sharing system includes electronic devices of a same manufacturer or electronic devices of different manufacturers, resources may be shared. In this way, not only interactivity between electronic devices of different manufacturers can be improved, but also an interconnection path between different electronic devices of a same manufacturer is added, thereby improving use experience of the user.

It should be noted that before establishing the intelligent voice sharing function, each electronic device needs to determine whether the user authorizes a function such as WIFI, Bluetooth, a microphone, and a speaker. Only when an access permission is enabled, that is, when the electronic device (for example, the intelligent voice sharing APP or the particular APP in the electronic device) receives an authorization operation of the user for a function such as WIFI, Bluetooth, a microphone, or a speaker, the electronic device can use WIFI, Bluetooth, the microphone, and the speaker.

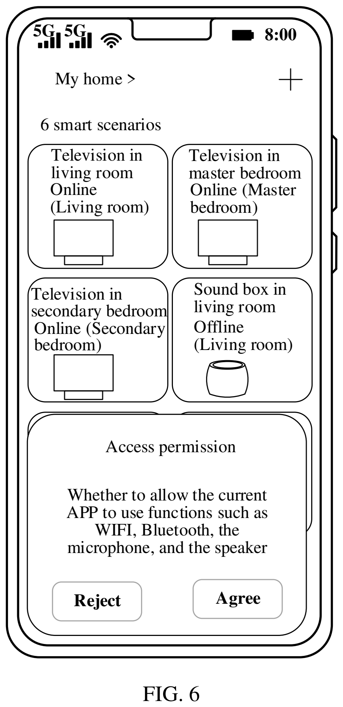

For example, as shown in FIG. 6, an example in which the electronic device is a mobile phone is used. The mobile phone may display prompt information of an access permission, an agree control, and a reject control on a device display interface of the intelligent voice sharing APP. The prompt information is used for querying the user whether the mobile phone can use functions such as WIFI, Bluetooth, the microphone, and the speaker. For example, the prompt information may be "Whether to allow the current APP to use functions such as WIFI, Bluetooth, the microphone, and the speaker".

In an example, if the agree control is triggered by the user, it indicates that the user agrees that the intelligent voice sharing APP uses functions such as WIFI, Bluetooth, the microphone, and the speaker. Therefore, the intelligent voice sharing APP may use the functions such as WIFI, Bluetooth, the microphone, and the speaker, to provide a basis for subsequently performing the voice control method. In another example, if the reject control is triggered by the user, it indicates that the user rejects the intelligent voice sharing APP to use the functions such as WIFI, Bluetooth, the microphone, and the speaker. Therefore, the intelligent voice sharing APP does not use the functions such as WIFI, Bluetooth, the microphone, and the speaker, for example, receive a voice instruction sent by the user.

In some embodiments, the interface of querying the user whether to enable the access permission shown in FIG. 6 is merely an example, and the user may alternatively determine whether to enable the access permission in another manner. For example, the mobile phone may display a function option (for example, a WIFI function or a Bluetooth function), so that the user can disable or enable a corresponding function by disabling or enabling the function option. For example, if a WIFI control is triggered by the user, it indicates that the user enables the WIFI function, that is, the mobile phone (for example, the intelligent voice sharing APP in the mobile phone) may send and/or receive, through WIFI, a voice instruction sent by the user.

S402: A temporary hub in the intelligent voice sharing system analyzes the voice instruction, to obtain an analytic result. The analysis result includes an identifier of the target device and an action instruction.

The temporary hub (or referred to as a first electronic device) is an electronic device in the intelligent voice sharing system.

Specifically, in a case in which the voice instruction includes wakeup information and action information, the temporary hub may analyze the voice instruction, to obtain the identifier of the target device and the action instruction. The identifier of the target device is used to represent the target device.

The following describes several possible determining manners of the temporary hub.

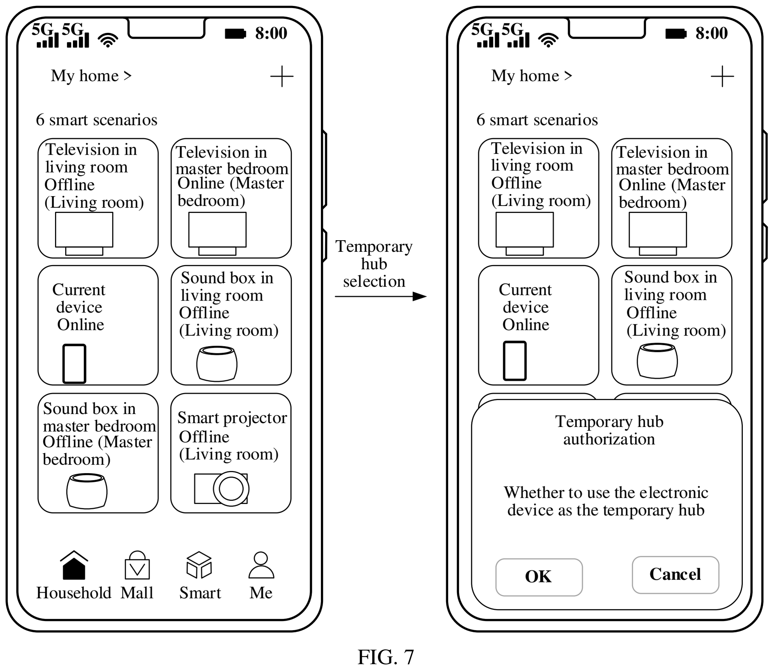

In an implementation, the temporary hub may be an electronic device specified by the user in the intelligent voice sharing system. In an example, the user may directly select any electronic device as the temporary hub by using the intelligent voice sharing APP. That is, the temporary hub is determined based on electronic device information selected by the user on a first interface displayed by a second electronic device. The second electronic device may be the same as or different from the first electronic device. This is not specifically limited. For example, as shown in FIG. 7, an example in which the second electronic device is a mobile phone, and the first interface is a smart scenario interface is used. The smart scenario interface is displayed on the mobile phone, and the smart scenario interface includes information about the electronic devices in the intelligent voice sharing system. The information about the electronic device (or referred to as electronic device information) may include an identifier (such as a name) of the electronic device. In addition, the information about the electronic device may further include an icon and/or a location of the electronic device.

Specifically, the intelligent voice sharing system includes the current device, a television in a living room, a television in a master bedroom, a sound box in the living room, a sound box in the master bedroom, and an intelligent projector. The mobile phone receives a trigger operation 1 (or referred to as a selection operation) input by the user on information about any device (for example, a television icon in the living room) on the smart scenario interface. For example, the trigger operation 1 may be an operation such as a double-tap operation or a long-press operation. Then, the mobile phone displays an authorization interface in response to the trigger operation 1. The authorization interface includes prompt information, an OK control, and a cancel control that are determined by the temporary hub. The prompt information is used for querying the user whether a tapped electronic device can be used as the temporary hub. For example, the prompt information may be "Whether to use the electronic device as the temporary hub". If the user taps the OK control, it indicates that the user agrees to use the electronic device as the temporary hub. Therefore, the intelligent voice sharing system may directly determine the electronic device triggered by the user as the temporary hub. If the user taps the cancel control, it indicates that the user does not agree to use the electronic device as the temporary hub. Therefore, the intelligent voice sharing system does not determine the electronic device tapped by the user as the temporary hub.

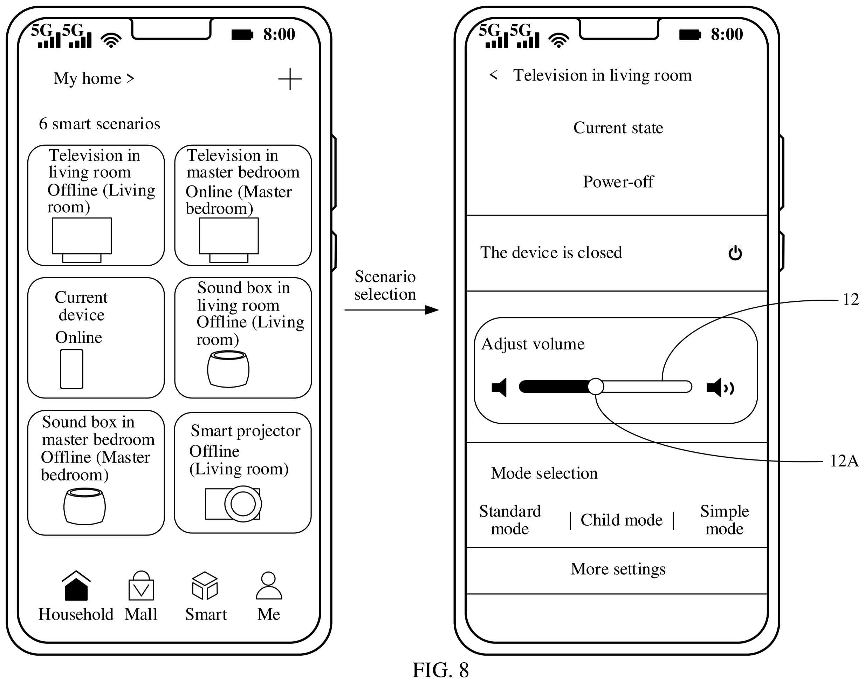

In another example, the intelligent voice sharing system may directly use, as the temporary hub, an electronic device that receives an operation manually input by the user. That is, the temporary hub is determined based on a control operation input by the user on electronic device information corresponding to the control control selected on the second interface displayed by the second electronic device. The second electronic device may be the same as or different from the first electronic device. This is not specifically limited. For example, as shown in FIG. 8, an example in which the second electronic device is a mobile phone, and the second interface is a smart scenario interface is used. The mobile phone receives a tap operation of the user on information (for example, television information in the living room) of any device on the smart scenario interface. For example, the tap operation may be a one-tap operation. Then, in response to the tap operation, the mobile phone displays at least one control such as adjusting the volume and an "on/off control". Then, in response to a control operation of the user on a control control in a current interface, the mobile phone may control the device to execute an action corresponding to the control control. For example, in response to a drag-rightward operation performed by the user on a button 12A on a progress bar 12, the mobile phone sends a volume increase instruction to the television. In response to the volume increase instruction, the television increases a volume value of the television. Because the user inputs an operation on the mobile phone, it indicates that the mobile phone is located at the same location as the user. Therefore, the mobile phone can accurately receive a voice instruction sent by the user, and quality of the received voice instruction is ensured, thereby accurately recognizing the voice instruction.

In another implementation, the temporary hub may be determined by the intelligent voice sharing system (for example, any electronic device or a specified electronic device in the intelligent voice sharing system) according to a distance between the user and each electronic device. A shorter distance between the user and the electronic device indicates higher definition, that is, higher accuracy, of a voice instruction output by the user and received by the electronic device, and higher accuracy of recognizing the voice instruction. Specifically, the electronic device may use an electronic device that is in the intelligent voice sharing system and whose distance to the user is less than a preset distance (for example, 3 meters) as the temporary hub. For example, the distance between the user and the electronic device may be measured by using an ultrasonic sensor.

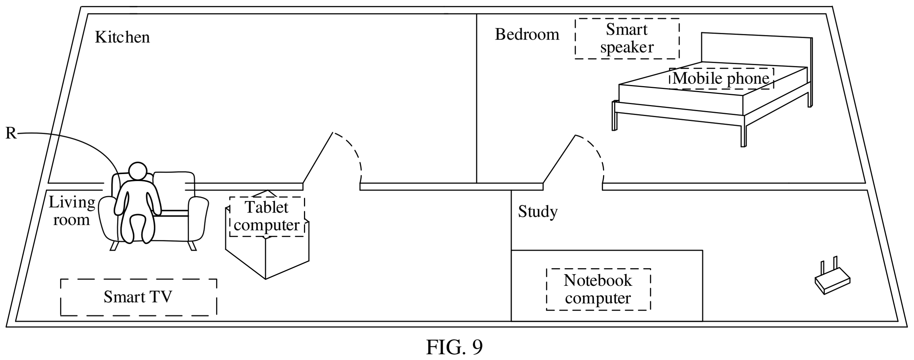

Optionally, if there are a plurality of electronic devices whose distances to the user are all less than the preset distance, any one of the plurality of electronic devices whose distances to the user are all less than the preset distance may be used as the temporary hub, or an electronic device whose distance to the user is the shortest may be used as the temporary hub. For example, as shown in FIG. 9, a user R is sitting on a sofa in a living room. That is, all electronic devices at home are located in a same space as the user R. Therefore, the intelligent voice sharing system may determine a corresponding temporary hub according to an actual location of the user. If a distance between only one electronic device and the user is less than the preset distance, the intelligent voice sharing system may directly use the electronic device as the temporary hub. For example, referring to FIG. 2, after parking a vehicle A in a parking lot, a user Y enters a company to work. That is, the distance between the user Y and the vehicle A is relatively long. Because the user Y holds a mobile phone F in hand, that is, the distance between the user Y and the mobile phone F is relatively short, a system manager may use the mobile phone F as the temporary hub.

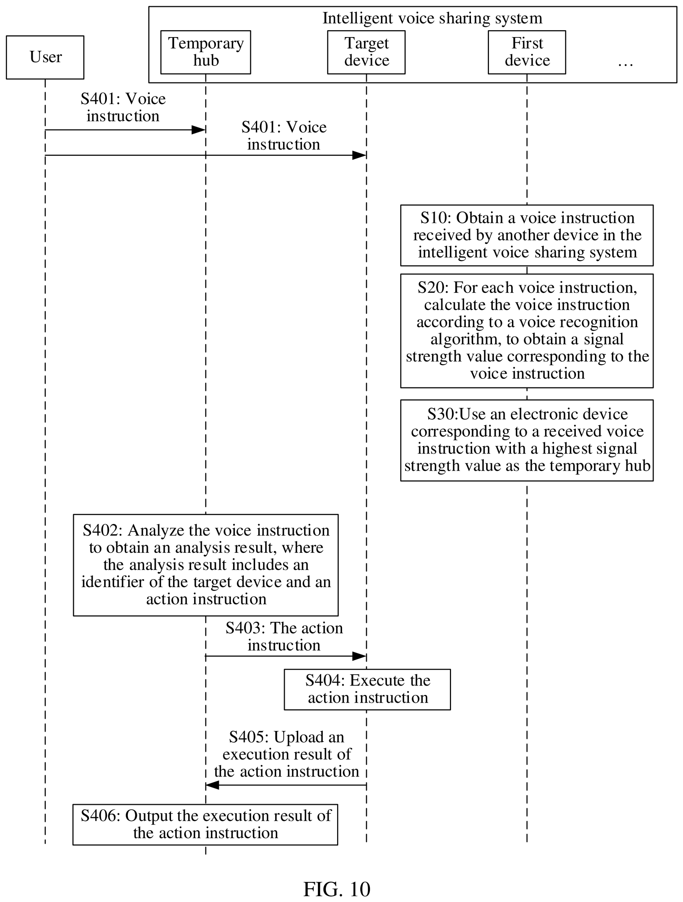

In another implementation, the temporary hub may be an electronic device that is in the intelligent voice sharing system and that receives a voice instruction with optimal signal strength. For example, a process of determining the temporary hub by using the signal strength of the voice instruction may include S10 to S30 shown in FIG. 10.

S10: A first device in an intelligent voice sharing system obtains a voice instruction received by another device in the intelligent voice sharing system.

Specifically, after an electronic device in the intelligent voice sharing system receives a voice instruction sent by a user, another device in the intelligent voice sharing system other than the first device may separately send the voice instruction received by the another device to the first device, that is, the first device may obtain voice instructions received by all electronic devices in the intelligent voice sharing system, to provide a basis for subsequently determining a temporary hub.

Optionally, in this implementation, because an algorithm in a mobile phone is relatively accurate, and an algorithm capability of the mobile phone is relatively strong, the mobile phone (for example, a system manager in the mobile phone) may directly determine the mobile phone as the first device. In another implementation, the system manager of the mobile phone may alternatively select any electronic device in intelligent voice sharing as the first device, which is not specifically limited.

Optionally, the first device may be preset, and all the electronic devices in the intelligent sharing system can learn of information about the first device (for example, an identifier of the first device).

It may be understood that, after the intelligent voice sharing system is established, all the electronic devices in the intelligent voice sharing system may be in a voice pickup state, that is, all the electronic devices can pick up a corresponding voice signal. For example, in a case in which the user sends a voice signal, all the electronic devices can receive the voice signal sent by the user. Then, each electronic device in the intelligent voice sharing system may parse the received voice signal, to obtain a digital signal. Then, another device in the intelligent voice sharing system may separately send the digital signal to the first device in a wireless communication manner such as WIFI or Bluetooth.

S20: For a voice instruction received by each of the another device, the first device determines, according to a voice recognition algorithm, a signal strength value corresponding to the voice instruction received by the another device.

The voice recognition algorithm is an algorithm for calculating signal strength of the voice instruction according to two evaluation indexes, namely, voice loudness and voice quality. The voice loudness is used for indicating a sound level corresponding to the voice instruction. In other words, the voice loudness may represent a level of a distance between an electronic device receiving the voice instruction (that is, the electronic device corresponding to the voice instruction) and the user. A larger voice loudness value indicates a shorter distance between the electronic device corresponding to the voice instruction and the user. The voice quality is used for indicating definition of the voice instruction. That is, whether the received voice instruction is affected by noise may be determined according to the voice quality. That is, a larger voice quality value indicates that the voice instruction is less affected by the noise and has higher recognition accuracy by the electronic device. In addition, in the voice recognition algorithm, signal strength of voice quality may also be evaluated by using voice loudness or voice quality.

In some embodiments, when the first device receives a digital signal sent by another device in the intelligent voice sharing system, the first device may parse the voice signal for each received voice instruction, to obtain a digital signal. That is, the first device includes digital signals received by all the electronic devices in the intelligent voice sharing system. Then, the intelligent voice sharing APP in the first device may calculate, for each digital signal, the digital signal according to the voice recognition algorithm, to obtain a signal strength value corresponding to the digital signal.

In some other embodiments, when the first device receives a voice instruction sent by another device in the intelligent voice sharing system, the first device may parse, for each received voice instruction, the voice instruction to obtain a digital signal. Then, the intelligent voice sharing APP in the first device may calculate the digital signal according to the voice recognition algorithm, to obtain a signal strength value corresponding to the voice instruction. It may be understood that, the foregoing process of parsing the voice signal by the electronic device may be performed before the signal is sent, or may be performed after the signal is sent. This is not specifically limited.

It should be noted that in a case in which the electronic device receives wakeup information sent by the user, the first device may calculate the wakeup information according to the voice recognition algorithm, to obtain a signal strength value corresponding to the wakeup information. In this way, when the user sends action information, the intelligent voice sharing system may determine a corresponding signal strength value. It is unnecessary to calculate the signal strength until the user outputs the action information, thereby providing a basis for subsequently determining the temporary hub in time, and further improving efficiency of determining the temporary hub.

S30: The first device uses an electronic device corresponding to a received voice instruction with a highest signal strength value as a temporary hub.

In this embodiment of this application, after obtaining, through calculation, a signal strength value corresponding to a voice instruction received by each of another device (briefly referred to as a signal strength value corresponding to each voice instruction), the first device may determine a signal strength value with a highest value from a signal strength value corresponding to each voice instruction, and use an electronic device corresponding to the voice instruction with the highest signal strength value, that is, an electronic device receiving the voice instruction with the highest signal strength value, as an optimal device (that is, the temporary hub). The optimal device is an electronic device that receives a strongest voice signal at this time in the intelligent voice sharing system, and can receive a voice instruction output by the user in time and accurately.

In some embodiments, the first device may determine a signal strength value with a highest value by sorting signal strength values corresponding to voice instructions according to a preset sequence. The preset sequence may be a descending sequence, or may be an ascending sequence. This is not specifically limited. For example, if the preset sequence is a descending sequence, it indicates that a signal strength value at a first location is the highest. Therefore, the first device may use the signal strength value at the first location as the signal strength value with the highest value. If the preset sequence is an ascending sequence, it indicates that a signal strength value at a final location is the highest. Therefore, the first device may use the signal strength value at the final location as the signal strength value with the highest value.

In some embodiments, the first device may alternatively use another manner of determining the temporary hub according to the signal strength value. For example, the first device may use an electronic device corresponding to a voice instruction whose signal strength value is greater than a preset strength value as the temporary hub.

In some embodiments, before determining the temporary hub, the first device needs to determine a quantity of voice instructions whose signal strength values meet a preset condition. For example, that the signal strength value meets the preset condition may be that the signal strength value is the highest, that the signal strength value is greater than a preset strength value (for example, 40 dBA), that the signal strength value is within a preset strength range (for example, 35 dBA to 45 dBA), or the like, which is not specifically limited.

Then, when the quantity is 1, the first device may directly use an electronic device corresponding to a voice instruction whose signal strength value meets the preset condition as the temporary hub. When the quantity is greater than 1, for example, if there are a plurality of voice instructions with the highest signal strength value, it indicates that there are a plurality of voice instructions meeting the preset condition, and the first device may use the electronic device corresponding to the voice instruction with the highest signal strength value meeting the preset condition as the candidate temporary hub. Then, the first device may select an optimal device from the candidate temporary hub as the temporary hub according to state information of the candidate temporary hub.

For example, the state information may include at least one of: endurance state information of the electronic device, running state information of the electronic device, and a quantity of programs running in a background of the electronic device. It may be understood that the user and a manufacturer of the electronic device may define new state information according to an actual situation. For example, the state information may alternatively be communication signal strength (such as WIFI signal strength or Bluetooth signal strength), a device response speed, and the like. This is not limited herein.

In some embodiments, the state information includes one type of information, and the first device may directly determine, according to the state information, an optimal device from a plurality of electronic devices corresponding to voice instructions whose signal strength values meet a preset condition corresponding to the state information.

In an example, the state information includes endurance state information of the electronic device, and the endurance state information indicates remaining use duration of a battery. Correspondingly, a preset condition corresponding to the endurance state information may include that the electronic device is in a charging mode or a remaining battery level of the electronic device is the highest. Correspondingly, the first device may use an electronic device in the charging mode or an electronic device having the highest remaining battery level in a plurality of candidate temporary hubs as the optimal device. For example, the candidate temporary hubs include a device A, a device B, and a device C. If the device A corresponds to a battery level of 76%, the device B corresponds to a battery level of 45%, and the device C corresponds to a battery level of 90%, the first device may use the device C as the optimal device, that is, the device C is the temporary hub.

In an example, the state information includes running state information of the electronic device, and the running state information indicates whether the electronic device is being used by the user. Correspondingly, a preset condition corresponding to the running state information may include that the electronic device is in an idle state, where the idle state refers to a state corresponding to the electronic device that is not used by the user. Correspondingly, the first device may use an electronic device in an idle state in the plurality of candidate temporary hubs as the optimal device. For example, the candidate temporary hubs include a device A, a device B, and a device C. If the device A and the device B are both in a busy state, that is, the device A and the device B are both used by the user, and the device C is in an idle state, the first device may use the device C as the optimal device, that is, the device C is the temporary hub.

In another example, the state information includes a quantity of programs running in the background of the electronic device, and the quantity of programs running in the background indicates a quantity of application programs running in the background in the electronic device. Correspondingly, a preset condition corresponding to the quantity of programs running in the background may include that the quantity of programs running in the background in the electronic device is the minimum, or the quantity of programs running in the background in the electronic device is less than a preset quantity (for example, 2). Correspondingly, the first device may use an electronic device, in the plurality of candidate temporary hubs, having a smallest quantity of programs running in the background as the optimal device. For example, the candidate temporary hubs include a device A, a device B, and a device C. If the quantity of programs running in the background of the device A is 3, the quantity of programs running in the background of the device B is 5, and the quantity of programs running in the background of the device C is 1, the first device may use the device C as the optimal device, that is, the device C is the temporary hub.

In some other embodiments, the state information includes a plurality of types of information. The first device may sort the state information according to a preset priority, and sequentially compare the state information of the electronic devices until the optimal device is determined from the candidate temporary hubs. The preset priority means that when the state information includes a plurality of types of information, a corresponding level is set for each type of state information, and the first device preferentially selects a candidate temporary hub corresponding to state information meeting a highest priority as the optimal device.

In another example, if the state information includes endurance state information of the electronic device and running state information of the electronic device, the first device may determine the optimal device from a plurality of candidate temporary hubs based on a priority corresponding to the endurance state information and a priority corresponding to the running state information. For example, the first device may screen the plurality of temporary candidate hubs in sequence according to a descending sequence of priorities and according to state information corresponding to the priorities, to obtain a candidate temporary hub meeting a preset condition corresponding to the state information corresponding to the priority. After obtaining a candidate temporary hub that meets a preset condition corresponding to state information corresponding to a lowest priority, the first device may use the candidate temporary hub that meets the preset condition corresponding to the state information corresponding to the lowest priority as the temporary hub.

For example, the device A has a remaining battery level of 94% and is in a busy state, the device B has a remaining battery level of 40% and is in an idle state, and the device C has a remaining battery level of 86% and is in an idle state. A priority corresponding to the endurance state information is lower than a priority corresponding to the running state information. Therefore, the first device may first screen a candidate temporary hub that meets a preset condition corresponding to the running state information. The preset condition corresponding to the running state information is that the electronic device is in an idle state. The first device determines that the device B and the device C are both in an idle state and the device A is in a busy state. Therefore, the device A does not meet the preset condition corresponding to the running state information. In other words, the candidate temporary hub that meets the preset condition corresponding to the running state information includes the device B and the device C. Then, the first device may continue to perform comparison based on the endurance state information, to determine a candidate temporary hub that meets a preset condition corresponding to the endurance state information. The preset condition corresponding to the endurance state information includes that a remaining battery level of an electronic device is the highest. Because the remaining battery level of the device C is higher than the remaining battery level of the device B, the candidate temporary hub that meets the preset condition corresponding to the endurance state information includes the device C. A priority corresponding to the endurance state information is the lowest. Therefore, the device C is a candidate temporary hub that meets the preset condition corresponding to the state information corresponding to the lowest priority, and the first device may use the device C as the temporary hub.

It should be noted that if electronic devices all having a same priority condition exist in a plurality of electronic devices corresponding to voice instructions with a highest signal strength value, the first device may select any electronic device meeting the priority condition as the optimal device.

In some embodiments, after the first device determines the temporary hub, the first device may upload a determining result of the temporary hub to another device in the intelligent voice sharing system, so that all devices located in the intelligent voice sharing system clearly know the determining result of the temporary hub. This not only can reduce occurrence of resource waste caused by instruction analysis performed by a device that is not the temporary hub, but also can reduce occurrence of a plurality of times of repeatedly executing an action instruction by the target device because the action instruction is sent to the target device for a plurality of times.

In an implementation, the intelligent voice sharing system may determine the temporary hub based on a target working mode. The target working mode may be a specified mode or an intelligent mode. Specifically, if the target working mode is a specified mode, it indicates that the user specifies an electronic device in the intelligent voice sharing system as the temporary hub, and the temporary hub may directly analyze the voice instruction. If the target working mode is an intelligent mode, it indicates that the user does not specify any electronic device in the intelligent voice sharing system as the temporary hub, and the first device may determine the temporary hub in the foregoing manner of determining the signal strength value. That is, the target working mode is determined after the plurality of electronic devices establish the intelligent voice sharing system. Later, when the electronic device in the intelligent voice sharing system receives the voice instruction sent by the user, the intelligent voice sharing system may directly determine the temporary hub based on the target working mode, to provide a basis for subsequent analysis of the voice instruction by the temporary hub.

Optionally, if the target working mode is a specified mode, it indicates that the user specifies an electronic device in the intelligent voice sharing system as the temporary hub, and another device in the intelligent voice sharing system other than the temporary hub may not be in a voice pickup state. That is, even if the another device can receive the voice instruction sent by the user, the another device may not pick up the voice instruction. In this way, unnecessary resource waste caused by voice instruction pickup can be reduced.

It may be understood that, the manner of determining the temporary hub by using the target working mode can improve an intelligent cooperative capability of all electronic devices in the intelligent voice sharing system. That is, as long as one electronic device in the intelligent voice sharing system can receive a voice instruction with strongest signal strength, the target device can complete a corresponding action, without needing the target device to receive a voice instruction sent by the user, thereby increasing use scenarios of the intelligent voice sharing system, and improving user experience.

S403: The temporary hub sends the action instruction to the target device.

Specifically, after determining an identifier of the target device and an action instruction, the temporary hub may send the action instruction to the target device in a manner of WIFI, Bluetooth, or a mobile communication network (such as 4G or 5G).

In some embodiments, an action executed by the temporary hub may be executed by an intelligent voice system in the temporary hub.

S404: The target device executes the action instruction.

In some embodiments, when the target device receives the action instruction sent by the temporary hub, the target device may execute a corresponding action in response to the action instruction. For example, if the voice instruction is a sound box control instruction, and the sound box control instruction is "Sound box YOYO, play music", after receiving an action instruction "play music", sound box YOYO may execute a music playback action. For another example, if the action instruction is a vehicle control instruction, and the vehicle control instruction is "Vehicle YOYO, turn on the air conditioner, and turn off ventilation", after receiving an action instruction of "turn on the air conditioner, and turn off ventilation", vehicle YOYO may control the "air conditioner" component to turn on.

S405: The target device uploads an execution result of the action instruction to the temporary hub.

The execution result of the action instruction may include completed state information and failed state information. The completed state information is used to indicate that the target device has completed an action corresponding to the action instruction. The failed state information is used to indicate that the target device fails to respond to the action instruction.

Specifically, if the target device has completed the action instruction, the target device may upload the completed state information to the temporary hub. If the target device fails to execute the action instruction, the target device may upload the failed state information to the temporary hub.

In some embodiments, the execution result of the action instruction may further include uncompleted state information, and the uncompleted state information is used to indicate that the target device is executing the action corresponding to the action instruction. For example, when the user sends an action instruction, the action instruction is in an uncompleted state, until the target device completes the action instruction, and the target device converts an execution result of the action instruction from uncompleted state information into completed state information; or, until the target device determines that the action instruction cannot be completed, the target device converts the execution result of the action instruction from the uncompleted state information into failed state information. That is, only when it is determined that the target device has completed the action instruction or it is determined that the target device cannot execute the action instruction, the target device uploads the execution result of the action instruction to the temporary hub.

S406: The temporary hub outputs the execution result of the action instruction.

Specifically, when the temporary hub receives the execution result of the action instruction sent by the target device, the temporary hub may output the execution result of the action instruction in a voice or text manner, so that the user can learn of the execution result in time, thereby avoiding the user from making a doubt about whether the voice instruction is executed.

For example, the action instruction is a vehicle control instruction, and the vehicle control instruction is "Turn on the air conditioner, and turn off ventilation". If the target device is executing the action instruction, the temporary hub may output, in a voice manner, "Turning on the air conditioner, and turning off ventilation for you". If the target device has completed the action instruction, the temporary hub may output, in a voice manner, "Already turn on the air conditioner, and turn off the ventilation for you". If the target device cannot complete the action instruction, the temporary hub may output, in a voice manner, "Sorry, cannot turn on the air conditioner, and turn off ventilation for you". In this way, the execution result of the action instruction can be notified in time, thereby improving use experience of the user.

For another example, the action instruction is a call initiation instruction, and the call initiation instruction is "Call mom in contacts". If the target device already calls "mom", the temporary hub may display prompt information "calling contact mom for you" on a current interface of the temporary hub in a text manner. If the target device cannot complete the action instruction, the temporary hub may display prompt information "Sorry, cannot call contact mom for you" on the current interface of the temporary hub in a text manner, so that the user manually calls mom or sends a voice instruction again, thereby reducing waiting time of the user.

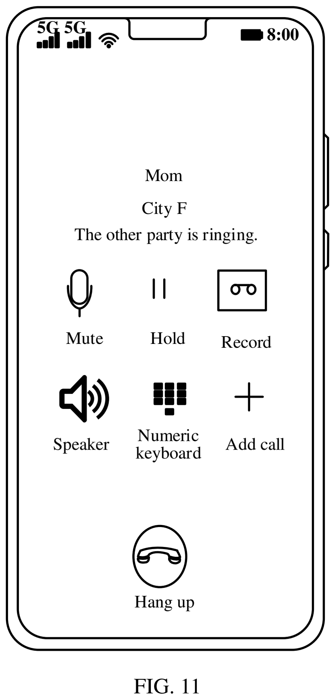

Optionally, the target device may further send phone information (such as a phone number or a contact name) of a called user (such as mom) to the temporary hub. In response to the phone information (or referred to as called number information), the temporary hub may display a call initiation interface (as shown in FIG. 11). The call initiation interface displays information about the called number. That is, the call initiation interface includes information about a called number (such as the called number or a region to which the called number belongs).

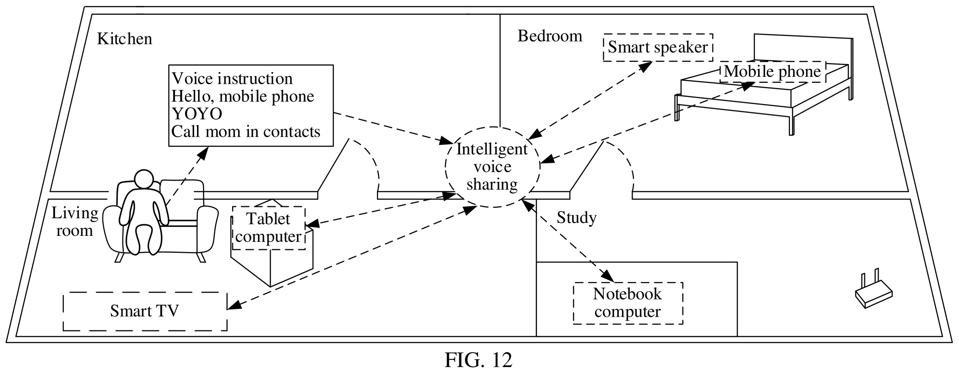

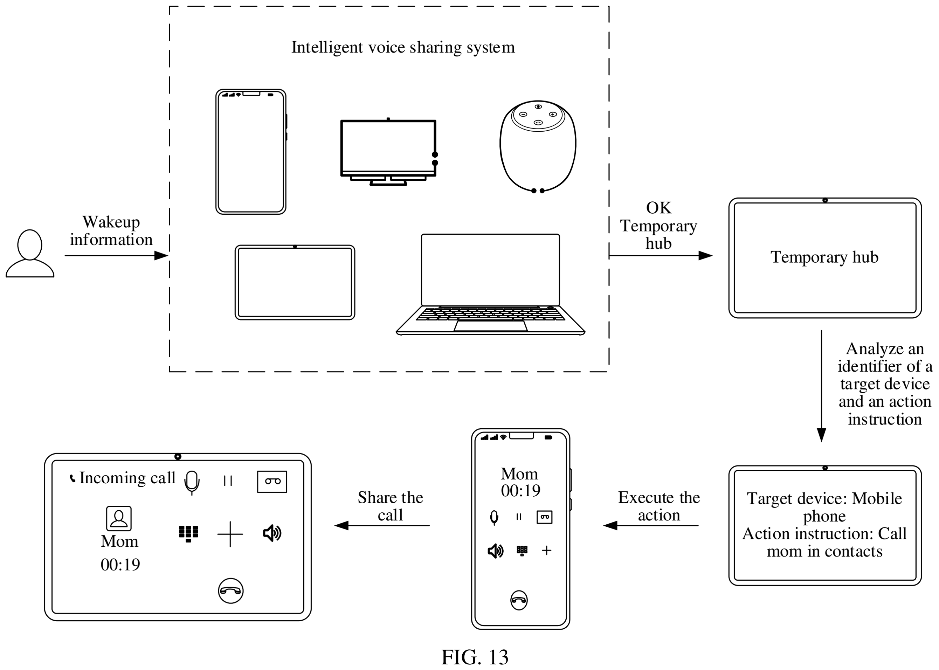

Optionally, after the call is answered, the user may further continue to make a call with a called party by using the temporary hub. The call process is as follows: First, as shown in FIG. 12, the user sends wakeup information "Hello, mobile phone YOYO" in a living room. Then, electronic devices (such as a mobile phone, a smart speaker, a tablet computer, a smart television, and a notebook computer in FIG. 12) in the intelligent voice sharing system separately receive the wakeup information sent by the user. Then, for each electronic device in the intelligent voice sharing system, the electronic device may parse the received wakeup information, to obtain a digital signal. Then, the smart speaker, the tablet computer, the smart television, and the notebook computer may each send a corresponding digital signal to the mobile phone in a WIFI or Bluetooth manner. Then, when the mobile phone receives the foregoing plurality of digital signals, an intelligent voice sharing APP of the mobile phone may separately calculate all the digital signals according to a voice recognition algorithm, to obtain a plurality of signal strength values. Then, as shown in FIG. 13, the mobile phone may use, according to the plurality of signal strength values, an electronic device corresponding to a voice instruction with a highest signal strength value as an optimal device, that is, determine the tablet computer in FIG. 12 as the optimal device, and determine the tablet computer as the temporary hub.

Then, if the user sends an action instruction, the tablet computer may analyze the action instruction with reference to the foregoing wakeup information, that is, analyze the voice instruction "Hello mobile phone YOYO, call mom in contacts" sent by the user, to obtain an analysis result. The analysis result is used for indicating that the target device corresponding to the user instruction is the mobile phone, and the action instruction is "call mom in contacts". Then, the tablet computer may send an action instruction "call mom in contacts" to the mobile phone. Then, the mobile phone may execute the action instruction "calling mom in contacts", that is, the mobile phone dials mom's phone number. Later, in a case of making a call, the mobile phone may transfer the call to the tablet computer, that is, the tablet computer displays a call interface of mom, and the user may make a call with mom by using the tablet computer.

Optionally, that the tablet computer makes a call with the called party (that is, a called device corresponding to "mom") is actually that the tablet computer makes a call with the called party by using the mobile phone. After receiving audio data sent by the called party, the mobile phone sends the audio data to the tablet computer. Then, the tablet computer may play the audio data, so that the user of the tablet computer can receive speaking content of the called party. Similarly, the tablet computer sends the audio data to the mobile phone, and after receiving the audio data sent by the tablet computer, the mobile phone sends the audio data to the called party. Then, the called party may play the audio data, so that the user of the called party can receive speaking content of a calling party, thereby implementing communication between a calling user and a called user.

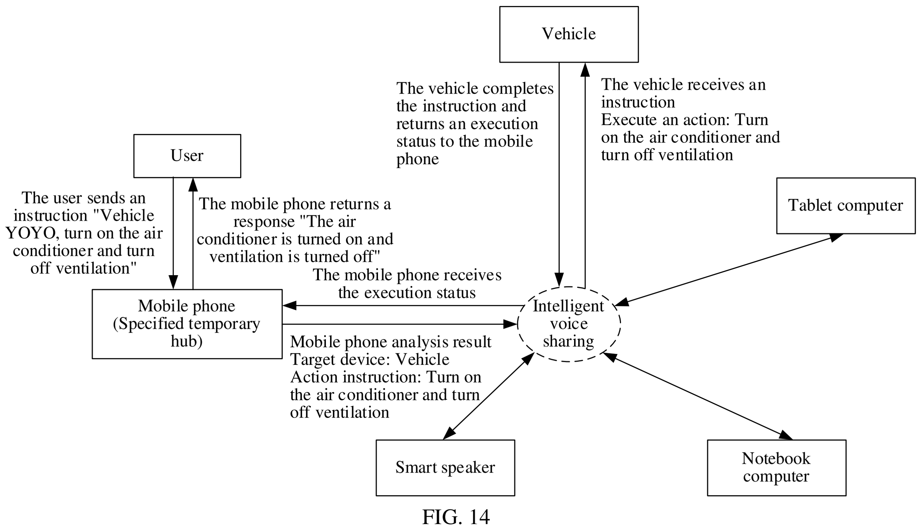

In some other embodiments, an example in which the user specifies that the temporary hub is the mobile phone is used. Referring to FIG. 14, the process is as follows: First, the user sends a voice instruction "Vehicle YOYO, turn on the air conditioner, and turn off ventilation". Then, the mobile phone may directly analyze the voice instruction "Vehicle YOYO, turn on the air conditioner, and turn off ventilation" sent by the user, to obtain an analysis result. The analysis result is used for indicating that a target device corresponding to the user instruction is a vehicle, and an action instruction is "Turn on the air conditioner, and turn off ventilation". Then, the mobile phone may send the action instruction "Turn on the air conditioner, and turn off ventilation" to the vehicle in a manner of WIFI, Bluetooth, or a mobile network. Then, the vehicle may execute the action instruction "Turn on the air conditioner, and turn off ventilation". Then, when completing the action instruction, the vehicle sends a completed state of the action instruction to the mobile phone. Then, the mobile phone may output "Already turn on the air conditioner, and turn off ventilation for you" in a voice manner. In this way, not only remote control of the vehicle can be implemented, but also cases in which the vehicle cannot receive the voice instruction sent by the user due to a fault of hardware (such as a microphone) in the vehicle can be reduced, thereby improving reliability of the intelligent voice sharing system.

An embodiment of this application further provides a computer-readable storage medium. The computer storage medium includes computer instructions. When the computer instructions are run on the foregoing electronic device, the electronic device is enabled to perform the functions or the steps in the foregoing method embodiments.

An embodiment of this application further provides a computer program product, including a computer program. When the computer program is run on an electronic device, the electronic device is enabled to perform the functions or the steps in the foregoing method embodiments.

Embodiments of this application provide a chip. The chip is configured to execute instructions. The chip, when run, performs the technical solutions in the foregoing embodiments. The implementation principles and technical effects thereof are similar, and details are not described herein again.

All or some of the foregoing embodiments may be implemented by using software, hardware, firmware, or any combination thereof. When the software is used for implementation, implementation may be entirely or partially performed in the form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any available medium accessible to a computer, or a data storage device such as a server or a data center in which one or more available mediums are integrated. The usable medium may be a magnetic medium (such as a floppy disk, a hard disk, or a magnetic tape), an optical medium (such as a digital video disc (digital video disc, DVD)), a semiconductor medium (such as a solid-state drive (solid state disk, SSD)) or the like.

It should be understood that "embodiments" mentioned throughout the specification means that particular features, structures, or characteristics related to the embodiments are included in at least one embodiment of this application. Therefore, the embodiments throughout the specification may not necessarily refer to the same embodiment. In addition, these specific features, structures, or characteristics may be combined in one or more embodiments in any appropriate manner. It should be understood that in various embodiments of this application, sequence numbers of the foregoing processes do not mean a sequence of execution. The execution sequence of the processes should be determined based on functions and internal logic of the processes, and should not constitute any limitation on an implementation process of embodiments of this application.

It should be further understood that in this application, "when" and "if" both mean that the UE or the base station performs corresponding processing in an objective situation. This is not limited in time, does not require a determining action when the UE or the base station implements the processing, and does not mean that there is another limitation.

A person of ordinary skill in the art may understand that various numbers such as first and second in this application are merely used for differentiation for ease of description, are not construed as a limitation on the scope of the embodiments of this application, and are also used for indicating a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

In this specification, the term "and/or" is merely used to describe an association relationship between associated objects, and indicates that three relationships may exist. For example, "A and/or B" may indicate the following three cases: Only A exists, both A and B exist, and only B exists, where A and B each may be in a singular or plural form.

The term "at least one of" in this specification represents all or any combination of the listed items. For example, "at least one of A, B, and C" may represent the following six cases: Only A exists, only B exists, only C exists, both A and B exist, both B and C exist, and A, B, and C all exist, where A may be singular or plural, B may be singular or plural, and C may be singular or plural.

A person of ordinary skill in the art may be aware that, the units and the algorithm steps in the examples described with reference to the embodiments disclosed in this specification can be implemented by using electronic hardware or a combination of computer software and electronic hardware. Whether the functions are executed in a mode of hardware or software depends on particular applications and design constraint conditions of the technical solutions. A person skilled in the art may use different methods to implement the described functions for each specific application, but it should not be considered that such an implementation goes beyond the scope of the present disclosure.

A person skilled in the art may clearly understand that, for the purpose of convenient and brief description, for specific working processes of the system, apparatus, and unit described above, refer to corresponding processes in the foregoing method embodiments. Details are not described herein again.

In the several embodiments provided in this application, it should be understood that the disclosed system, apparatus, and method may be implemented in another manner. For example, the apparatus embodiments described above are merely examples. For example, the unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate components may or may not be physically separated, and components displayed as units may or may not be physical units, that is, may be located in one place, or may be distributed on a plurality of network units. Some or all of the units may be selected based on an actual requirement, to achieve the objectives of the solutions in the embodiments.

In addition, the functional units in the embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

For same or similar parts in the embodiments of this application, refer to these embodiments. In the embodiments of this application and the implementations/implementation methods in the embodiments, unless otherwise specified or in logical conflicts, terms and/or descriptions between different embodiments and implementations/implementation methods in the embodiments have consistency and may be mutually referenced. Technical features in different embodiments and implementations/implementation methods in the embodiments may be combined according to internal logical relationships thereof to form a new embodiment, implementation, implementation method. The foregoing implementations of this application do not constitute a limitation on the protection scope of this application.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims. In conclusion, the foregoing descriptions are merely example embodiments of the technical solution of this application, but are not intended to limit the protection scope of this application. Any modification, equivalent replacement, improvement, and the like made within the spirit and principle of this application shall fall within the protection scope of this application.

## Claims

1. A voice control method, applied to a first electronic device in a plurality of electronic devices of a voice sharing system, wherein wakeup keywords corresponding to the plurality of electronic devices are different, and a communication connection is established between the plurality of electronic devices; and
the method comprises:
receiving, by the first electronic device, a voice instruction input by a user; and
sending, by the first electronic device, an action instruction to a target device according to the voice instruction when the voice instruction comprises a wakeup keyword corresponding to the target device, wherein the action instruction is used for representing an action that the user wants the target device to execute in the voice instruction.

2. The method according to claim 1, wherein the method further comprises:
receiving, by the first electronic device, an analysis instruction sent by a first device,
wherein the analysis instruction is used for instructing the first electronic device to analyze the voice instruction.

3. The method according to claim 1, wherein the first electronic device is an electronic device selected by the user from the plurality of electronic devices.

4. The method according to claim 3, wherein the first electronic device is determined based on electronic device information selected by the user on a first interface displayed by a second electronic device, or the first electronic device is determined based on electronic device information corresponding to a control control selected by the user on a second interface displayed by the second electronic device;
wherein the second electronic device is one of the plurality of electronic devices, and the second electronic device is the same as or different from the first electronic device.

5. The method according to any one of claims 1-4, wherein the method further comprises:
receiving, by the first electronic device, an execution result of the action instruction sent by the target device, wherein the execution result of the action instruction is used to indicate whether the target device completes an action corresponding to the action instruction; and
outputting, by the first electronic device, the execution result of the action instruction.

6. The method according to any one of claims 1-5, wherein the action instruction comprises a call initiation instruction, and the call initiation instruction is used for triggering the target device to perform call initiation based on a called number or contact information in the call initiation instruction.

7. The method according to claim 6, wherein the method further comprises:
receiving, by the first electronic device, called number information sent by the target device; and
displaying, by the first electronic device, a call initiation interface, wherein the call initiation interface comprises the called number information.

8. The method according to any one of claims 1-5, wherein the action instruction comprises a vehicle control instruction, and the vehicle control instruction is used to trigger the target device to perform control based on component information in the vehicle control instruction.

9. A device selection method, applied to a first device in a plurality of electronic devices of a voice sharing system, wherein wakeup keywords corresponding to the plurality of electronic devices are different, and a communication connection is established between the plurality of electronic devices; and
the method comprises:
receiving, by the first device, a voice instruction received by another electronic device in the voice sharing system other than the first device;
recognizing, by the first device for a voice instruction received by each of the plurality of electronic devices, the voice instruction according to a voice recognition algorithm, to obtain a signal strength value corresponding to the voice instruction, wherein the voice recognition algorithm is an algorithm for calculating signal strength of the voice instruction according to voice loudness and/or voice quality; and
using, by the first device, an electronic device corresponding to a received voice instruction whose signal strength value meets a preset signal condition as a first electronic device, wherein the first device is the same as or different from the first electronic device.

10. The method according to claim 9, wherein when the signal strength value is the highest or the signal strength value is greater than a preset strength value, the first device determines that the signal strength value meets the preset signal condition.

11. The method according to claim 9 or 10, wherein the using, by the first device, an electronic device corresponding to a received voice instruction whose signal strength value meets a preset signal condition as a first electronic device comprises:
obtaining, by the first device when there are a plurality of voice instructions whose signal strength values meet the preset signal condition, state information of an electronic device corresponding to each voice instruction whose signal strength value meets the preset signal condition, wherein the state information comprises at least one of endurance state information, running state information, and a quantity of background running programs; and
using, by the first device, an electronic device corresponding to a voice instruction meeting a preset condition corresponding to the state information as the first electronic device.

12. The method according to claim 11, wherein when the state information comprises the endurance state information, a preset condition corresponding to the endurance state information comprises that the electronic device is in a charging mode or a remaining battery level of the electronic device is the highest; or
when the state information comprises the running state information, a preset condition corresponding to the running state information comprises that the electronic device is in an idle state; or
when the state information comprises the quantity of background running programs, a preset condition corresponding to the quantity of background running programs comprises that the quantity of background running programs in the electronic device is minimum, or the quantity of background running programs in the electronic device is less than a preset quantity.

13. The method according to claim 11, wherein when the state information comprises a plurality of pieces of information, the using, by the first device, an electronic device corresponding to a voice instruction meeting a preset condition corresponding to the state information as the first electronic device comprises:
screening, by the first device according to a descending sequence of priorities corresponding to the state information, a plurality of temporary first electronic devices sequentially according to state information corresponding to the priorities, to obtain candidate first electronic devices meeting a preset condition corresponding to the state information corresponding to the priorities; and
when a candidate first electronic device meeting a preset condition corresponding to state information corresponding to a lowest priority is obtained, using, by the first device, the candidate first electronic device meeting the preset condition corresponding to the state information corresponding to the lowest priority as the first electronic device.

14. A voice control method, applied to a plurality of electronic devices of a voice sharing system, wherein wakeup keywords corresponding to the plurality of electronic devices are different, and a communication connection is established between the plurality of electronic devices; and
the method comprises:
separately receiving, by at least one electronic device in the voice sharing system, a voice instruction input by a user;
sending, by a first electronic device in at least one electronic device, an action instruction to a target device according to the voice instruction when the voice instruction comprises a wakeup keyword corresponding to the target device; and
executing, by the target device, a corresponding action in response to the action instruction.

15. An electronic device, wherein the electronic device comprises a microphone, a memory, and one or more processors; the microphone, the memory, and the processor are coupled to each other; the microphone is configured to collect voice data, the memory is configured to store computer program code, and the computer program code comprises computer instructions; and when the processor executes the computer instructions, the electronic device is enabled to perform the method according to any one of claims 1-14.

16. A computer-readable storage medium, comprising computer instructions, wherein when the computer instructions are run on an electronic device, the electronic device is enabled to perform the method according to any one of claims 1-14.
